# EUROPÄISCHE PATENTANMELDUNG

(11) **EP 2 481 622 A1**
(43) Veröffentlichungstag der Anmeldung: **01.08.2012**
(21) Anmeldenummer: 12000523.6
(22) Anmeldetag: 27.01.2012
(51) Int. Cl.: B60K 25/02, F02B 67/06, F16H 55/36, F16H 3/54

(54) **Anordnung mit Verbrennungskraftmaschine und daran angekoppeltem Planetengetriebe sowie Kraftfahrzeug**

(30) Priorität: 01.02.2011 DE 102011010087
(71) Anmelder: Audi AG, 85045 Ingolstadt (DE)
(72) Erfinder: Langbein, Stefan, 85290 Geisenfeld (DE)
(74) Vertreter: Lehle, Josef

(57) **Zusammenfassung**

Bei einer Anordnung mit einer Verbrennungskraftmaschine, die mit einem Planetengetriebe gekoppelt ist, ist zur Dämpfung bzw. Tilgung von Schwingungen der Kurbelwelle (12) der Verbrennungskraftmaschine (10) eine Tilgereinheit (20) vorgesehen. Zu diesem Zweck ist ein Trägerteil (40) an einer Stelle an die Kurbelwelle (12) angebunden, die näher an Brennkammern (14) der Verbrennungskraftmaschine (10) liegt als ein Verbindungsteil (36), über das die Kurbelwelle mit dem Planetengetriebe gekoppelt ist.

## Beschreibung

Die Erfindung betrifft eine Anordnung mit einer Verbrennungskraftmaschine, an die ein Planetengetriebe in bestimmter Weise angebunden ist.

Üblicherweise dient eine solche Anordnung dazu, die Verbrennungskraftmaschine über das Planetengetriebe und gegebenenfalls ein weiteres Getriebe wie z. B. einen Riementrieb mit einer elektrischen Maschine zu koppeln, die als Starter der Verbrennungskraftmaschine fungieren kann und gleichzeitig als Generator betreibbar ist. Zur Ankopplung des Planetengetriebes ist ein Element aus der Gruppe von Sonnenrad, Planetenträger und Hohlrad, bevorzugt der Planetenträger, mit einer Kurbelwelle der Verbrennungskraftmaschine verbunden, und zwar über ein Verbindungsteil, typischerweise einen Flansch, der das bezüglich einer Brennkammer der Verbrennungskraftmaschine distale Ende der Kurbelwelle ankoppelt.

Sowohl aus der DE 101 48 961 A1, als auch der DE 198 22 426 C2 ist es bekannt, in die Anordnung einen Tilger für Schwingungen der Kurbelwelle zu integrieren. Ein solcher Tilger weist eine sog. Tilgermasse auf, d. h. einen Tilgerkörper, der Schwingungen aufnimmt und abdämpft.

Während bei der DE 101 48 961 A1 der Tilger mehr oder weniger an das Sonnenrad des Planetengetriebes angekoppelt ist, ist in der DE 198 22 426 C2 eine Anordnung beschrieben, bei der der Planetenträger mit der Kurbelwelle über einen Schwingungsentkoppler verbunden ist. Es geht hierbei um eine Nichtweiterleitung der Schwingungen des Kurbelwellenendes zum Planetengetriebe.

Nachteilig an dieser Anordnung ist, dass nicht optimal ein Kraftfluss zwischen der Kurbelwelle und dem Planetenträger erfolgen kann, wenn dieser Kraftfluss gewünscht ist.

Es ist somit Aufgabe der vorliegenden Erfindung, in verbessertem Maße für das Dämpfen oder Tilgen von Schwingungen der Kurbelwelle zu sorgen, ohne dass die eigentliche Funktion der Anordnung mit dem Planetengetriebe beeinträchtigt wird.

Diese Aufgabe wird durch eine Anordnung gemäß Patentanspruch 1 gelöst. Eine bevorzugte Ausführungsform dieser Anordnung findet Verwendung in einem Kraftfahrzeug gemäß Patentanspruch 6.

Bei der erfindungsgemäßen Anordnung ist ein Trägerteil, das einen Schwingungsdämpferkörper oder -tilgerkörper trägt, mit der Kurbelwelle an einem Anbindungsbereich verbunden, der näher an der zumindest einen Brennkammer der Verbrennungskraftmaschine liegt als das Verbindungsteil, über das der Planetenträger mit der Kurbelwelle gekoppelt ist, also näher an der Brennkammer liegt als der Anbindungsbereich, über den der Planetenträger bzw. das Verbindungsteil mit der Kurbelwelle verbunden ist. Mit anderen Worten ist der Planetenträger näher an dem Ende der Kurbelwelle verbunden als das Trägerteil.

Dadurch, dass das Trägerteil an anderer Stelle mit der Kurbelwelle verbunden ist als das Verbindungsteil, kann ein Drehmoment über einen ersten Wirkpfad zum Schwingungsdämpferkörper oder Schwingungstilgerkörper gelangen, und zwar an dem Getriebe vorbei, wohingegen über einen zweiten Wirkpfad Drehmoment von der Kurbelwelle auf den Planetenträger übertragen wird.

Erfindungsgemäß bereitgestellt wird somit eine Anordnung mit einer Verbrennungskraftmaschine, die eine Kurbelwelle aufweist, wobei über einen ersten Wirkpfad Drehmoment in eine Tilgereinheit eintragbar ist und über einen zweiten, von dem ersten Wirkpfad gesonderten Wirkpfad, Drehmoment in ein mit der Kurbelwelle verbundenes Planetengetriebe eintragbar ist. Das Verhältnis zwischen dem Drehmoment, das über den ersten Wirkpfad eingetragen wird, und dem Drehmoment, das mit den zweiten Wirkpfad eingetragen wird, hängt von der Frequenz der Drehung ab. Störende Schwingungen der Kurbelwelle, wie sie aus deren Anregung über endlich viele an ihr angeordnete Brennkammern entstehen, werden hauptsächlich über das Trägerteil an den Schwingungsdämpferkörper und/oder -tilgerkörper übertragen, wohingegen ein Antriebsmoment mit der Umdrehungszahl der Kurbelwelle hauptsächlich auf das Planetengetriebe übertragen wird.

Bei einer bevorzugten Ausführungsform der Erfindung umfasst das Trägerteil einen Blechkörper, an den als Schwingungsdämpferkörper ein metallener Ring angebunden ist, insbesondere über ein elastisches Material, z. B. einen Gummiring. Ein solcher Blechkörper lässt sich besonders einfach ausformen und an die Kurbelwelle anbinden.

Bei einer bevorzugten Ausführungsform der Erfindung ist die Kurbelwelle mit dem Planetenträger verbunden, das Sonnenrad mit einer Riemenscheibe verbunden, und damit die Riemenscheibe die Anordnung zumindest teilweise nach außen hin abschließen kann, ist bevorzugt vorgesehen, dass der metallene Ring zwischen einem Abschnitt des Hohlrads des Planetengetriebes und einem radial äußeren Abschnitt der Riemenscheibe angeordnet ist.

Wie an sich bekannt, ist es vorteilhaft, wenn das Hohlrad zur Herstellung bestimmter Betriebsmodi an einem verbrennungsmotorfesten Bauelement festsetzbar ist. Hierzu ist bevorzugt das Hohlrad mit einem Anker gekoppelt, dem ein Elektromagnet zugeordnet ist. Zum kompakten Bau der Anordnung ist hierbei bevorzugt vorgesehen, dass der Anker und der Elektromagnet axial (bezüglich einer Drehachse der Elemente des Planetengetriebes, also Sonnenrad, Planetenträger und Hohlrad), versetzt gegenüber dem metallenen Ring angeordnet sind. Der metallene Ring und der Anker mit dem Elektromagneten nehmen jeweils nicht so viel Platz in Anspruch, als dass sie nicht axial hintereinander angeordnet werden könnten, ohne die axiale Bautiefe der Anordnung wesentlich zu vergrößern.

Bei einer bevorzugten Weiterbildung dieser Ausführungsform sind das Sonnenrad und der Planetenträger über einen Freilauf miteinander gekoppelt. Auf diese Weise kann insbesondere das Sonnenrad den Planetenträger überholen, also mit einer höheren Drehzahl drehen als der Planetenträger. Dadurch lassen sich diejenigen Aggregate, die über die Riemenscheibe angekoppelt sind, mit entsprechend hoher Drehzahl unabhängig von der Verbrennungskraftmaschine drehen. Die Funktion des Freilaufs ist in einer anderen Ausführungsform auch über eine entsprechend angesteuerte schaltbare Kupplung darstellbar, die darüber hinaus weitere Funktionalitäten des Planetengetriebes ermöglicht.

Dies gilt insbesondere für eine elektrische Maschine, die z. B. als Starter der Verbrennungskraftmaschine dienen kann und gleichzeitig als Generator betreibbar ist. In einem Kraftfahrzeug ist eine solche elektrische Maschine bevorzugt über einen Riementrieb, der die Riemenscheibe umfasst, mit der Verbrennungskraftmaschine gekoppelt.

Nachfolgend wird eine bevorzugte Ausführungsform der Erfindung unter Bezug auf die Zeichnung näher beschrieben, in der
- Fig. 1: die erfindungsgemäße Anordnung aus Verbrennungskraftmaschine und Planetengetriebe mit daran über einen Riementrieb angekoppelter elektrischer Maschine in einer Prinzipdarstellung veranschaulicht und
- Fig. 2: in einem radialen Schnitt das Planetengetriebe mit einer Riemenscheibe des Riementriebs und einer Schwingungsdämpfereinheit zeigt.

An eine Verbrennungskraftmaschine 10 mit einer Kurbelwelle 12, die durch die Bewegung von Hubkolben in Brennkammern 14 in Drehung versetzbar ist, ist eine Anordnung 16 angekoppelt, die ein Planetengetriebe umfasst, an das eine Riemenscheibe 18 angekoppelt ist, und das eine Schwingungsdämpfereinheit 20 aufweist. Die Riemenscheibe 18 dient zur Ankopplung einer elektrischen Maschine 22 über einen Riementrieb 24, zu dem eine Riemenscheibe 26 gehört, der über eine Welle 28 mit einem in der Figur nicht gezeigten Rotor der elektrischen Maschine 22 drehbar ist.

Das Planetengetriebe umfasst ein Sonnenrad 30, das mit der Riemenscheibe 18 verbunden ist, und das mit Planeten 32 kämmt, die über einen Planetenträger 34 miteinander verbunden sind. Zwischen Planetenträger 34 und Sonnenrad 30 ist ein Freilauf 35 bereitgestellt. Der Planetenträger 34 ist über einen Flansch 36 mit der Kurbelwelle 12 verbunden. Der Flansch ist über axiale Schrauben 38 mit der Kurbelwelle 12 verschraubt. Zwischen dem Flansch 36 und der Kurbelwelle 12 ist hierbei gleichzeitig ein Trägerblech 40 eingeklemmt, auf dem ein Gummiring 32 aufsitzt, der wiederum einen Stahlring 44 trägt. Das Trägerblech 40, der Gummiring 42 und der Stahlring 44 bilden die Schwingungsdämpfereinheit 20.

Ein Hohlrad 46 des Planetengetriebes ist über eine Bremse 48 mit einem verbrennungskraftmaschinenfesten Bauteil 50 verbunden. Die Bremse 48 umfasst einen Elektromagneten 52, der an das verbrennungskraftmaschinenfeste Bauteil angebunden ist, und der in der Lage ist, einen Anker 54 anzuziehen, der mit dem Hohlrad 46 verbunden ist.

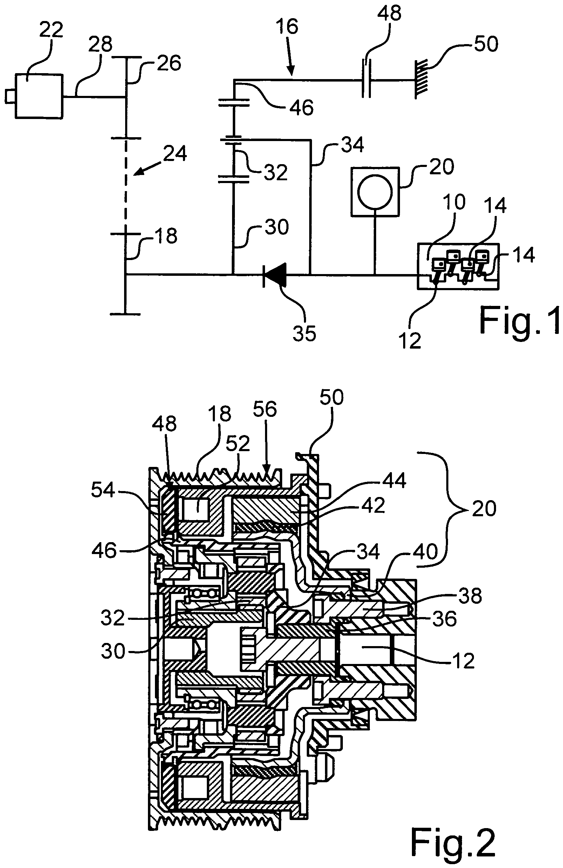

Wie in Fig. 2 zu sehen, sind der Stahlring 44 mit dem Gummiring 42 einerseits und der Elektromagnet 52 und der Anker 54 andererseits in dem selben radialen Bereich angeordnet, und zwar genau zwischen dem mit einer Außenprofilierung 56 versehenen radial äußeren Abschnitt der Riemenscheibe 18 mit dem zu äußerst gelegenen Hohlrad 46. An dieser Stelle lassen sich diese Einheiten besonders gut unterbringen.

Eine wesentliche Eigenschaft der dargestellten Anordnung ist es, dass dadurch, dass das Trägerblech 40 zwischen dem Flansch 36 und der Kurbelwelle 12 eingesteckt ist, ein Wirkpfad von der Kurbelwelle 12 zu dem Stahlring 44 möglich ist, der völlig an dem Planetengetriebe vorbeiläuft. Der Anbindungsbereich des Trägerblechs 40 an die Kurbelwelle 12 befindet sich insbesondere näher an den Hubkolben und der zugehörigen Brennkammer 14 der Verbrennungskraftmaschine 10 als der Planetenträger 34. Gibt es sog. dynamische Drehmomente, also unerwünschte Drehmomente, die durch Schwingungen der Kurbelwelle 12 zustande kommen werden davon ca. 75% in die Schwingungsdämpfereinheit 20 eingetragen, und nur ca. 25% verlaufen über das Getriebe. Dadurch wird das Planetengetriebe der Anordnung 16 wesentlich besser vor Schwingungen geschützt als bei anderen Gestaltungen des Wirkpfades.

## Patentansprüche

1. Anordnung mit einer Verbrennungskraftmaschine (10), die zumindest eine Brennkammer (14) und eine Kurbelwelle (12) aufweist, und mit einem Planetengetriebe (16), von dem ein Element aus der Gruppe von Sonnenrad, Planetenträger und Hohlrad mit der Kurbelwelle (12) über ein Verbindungsteil (36) verbunden ist, und wobei ein Trägerteil (40), welches einen Schwingungsdämpferkörper oder Schwingungstilgerkörper (44) trägt, mit der Kurbelwelle an einem Anbindungsbereich verbunden ist, der näher an der zumindest einen Brennkammer (14) liegt als das Verbindungsteil (36).

2. Anordnung nach Anspruch 1, bei der das Trägerteil (40) einen Blechkörper umfasst, an den ein metallener Ring (44) angebunden ist.

3. Anordnung nach Anspruch 2, bei dem die Kurbelwelle (12) mit dem Planetenträger (34) verbunden ist, das Sonnenrad (30) mit einer Riemenscheibe (18) verbunden ist, und der metallene Ring zwischen einem Abschnitt des Hohlrads (46) und einem radial äußeren Abschnitt der Riemenscheibe (18) angeordnet ist.

4. Anordnung nach Anspruch 3, bei der das Hohlrad (46) mit einem Anker (54) gekoppelt ist, dem ein Elektromagnet (52) zugeordnet ist, wobei der Anker (54) und der Elektromagnet (52) axial versetzt gegenüber dem metallenen Ring (44) angeordnet sind.

5. Anordnung nach Anspruch 3 oder Anspruch 4, bei der das Sonnenrad (18) und der Planetenträger (34) über einen Freilauf (35) miteinander gekoppelt oder über eine Kupplung miteinander koppelbar sind.

6. Kraftfahrzeug mit einer Anordnung nach Anspruch 5, bei der eine elektrische Maschine (22) über einen Riementrieb (24), der die Riemenscheibe (18) umfasst, mit der Verbrennungskraftmaschine (10) gekoppelt ist.
